# EUROPEAN PATENT SPECIFICATION

(11) **EP 2 991 477 B1**
(45) Date of publication and mention of the grant of the patent: **28.06.2017**
(21) Application number: 14734226.5
(22) Date of filing: 22.04.2014
(51) Int. Cl.: A01K 63/00, A01K 63/04, A01K 63/06

(54) **AQUARIUM AND SERVICE UNIT FOR SUCH AQUARIUM**
AQUARIUM UND BEDIENEINHEIT FÜR EIN SOLCHES AQUARIUM
AQUARIUM ET UNITE DE SERVICE POUR UN TEL AQUARIUM

(30) Priority: 03.05.2013 IT PD20130026 U
(43) Date of publication of application: 09.03.2016
(73) Proprietor: Newa Tecno Industria S.R.L., 35010 Loreggia PD (IT)
(72) Inventor: BELLIA, Fabio, I-35010 Trebaseleghe (PD) (IT); GUOLI, Giacomo, I-20125 Milano (IT)
(74) Representative: Locas, Davide
(86) International application number: PCT/IB2014/060897
(87) International publication number: WO 2014/177974

(56) References cited:
- DE-A1-102005 000 601
- US-A- 3 638 795
- US-A- 3 983 843
- US-A- 4 078 522

## Description

The invention relates to an improved aquarium and a services unit for aquaria of the type incorporating the characteristics mentioned in the precharacterising clause of the principal claim.

Aquaria incorporating these characteristics are for example known from the present output by the applicant.

A known requirement in the construction of aquaria is that of providing them with services which go from means intended for illuminating the tank, to circulation, aeration and filtering of the water, and also possibly its heating and/or other accessory functions.

At the present time this requirement is satisfied by using specific devices that are individually capable of performing one of the services required (US 3983843, DE 102005000601). These devices (filters, pumps, heaters and the rest) are generally grouped together beneath the lid which covers the top of the entire open part of the tank. This lid normally incorporates illumination means (US 4078522, US 3638795).

In the light of what has been said, there is little unity in the system and little or even no capability of integration between the various devices mounted beneath the lid. In addition to this the lid generally extends over the entire open part of the tank, thus impeding access and aesthetically making it unavoidably heavy.

The technical problem underlying this invention is that of providing an aquarium and a services unit for aquaria which are structurally and functionally designed to overcome all the disadvantages mentioned with reference to the known art mentioned.

This problem is resolved by the invention through an aquarium and corresponding services unit incorporating the characteristics which are the subject matter of the claims below.

The characteristics and advantages of the invention will be more apparent from the detailed description of a preferred embodiment illustrated by way of indication and without limitation with reference to the appended drawings in which:
- Figure 1 is a perspective view of an improved aquarium including a services unit according to the invention;
- Figure 2 is a perspective view from above of a services unit according to the invention with the lid removed;
- Figure 3 is a perspective view from below of a services unit according to the invention;
- Figure 4 is a perspective view of a second services unit according to the invention;
- Figure 5 is a view in cross-section along the line V-V in Figure 4;
- Figure 6 is a view of a services unit according to the invention in cross-section along the line A-A;
- Figure 7 is a further view of a services unit according to the invention in cross-section along the line B-B.

In the figures, 1 indicates as a whole an aquarium, terrarium or a similar "enclosed" environment incorporating a tank 2 standing on a base 3 via a bottom wall 4. Tank 2 is surrounded laterally by side walls 5a-d and is open at the top with an open part 6.

Tank 2 has at least two side walls 5a and 5b which converge towards each other, preferably at a right angle. Services unit 10 according to the invention is removably attached to walls 5a and 5b of tank 2 at the angle formed between them.

Services unit 10 in turn comprises a single technical element 11 with a head 12 and an angular rib member 13. Head 12 is shaped in plan as a sector of a circle or ellipse 121, the centre of which is approximately located at the angle between the two convergent walls 5a,b. Angular rib member 13 extends at right angles to head 12 in the corner area and is designed to bear against the angle formed between the two walls 5a,b on the outside of tank 2.

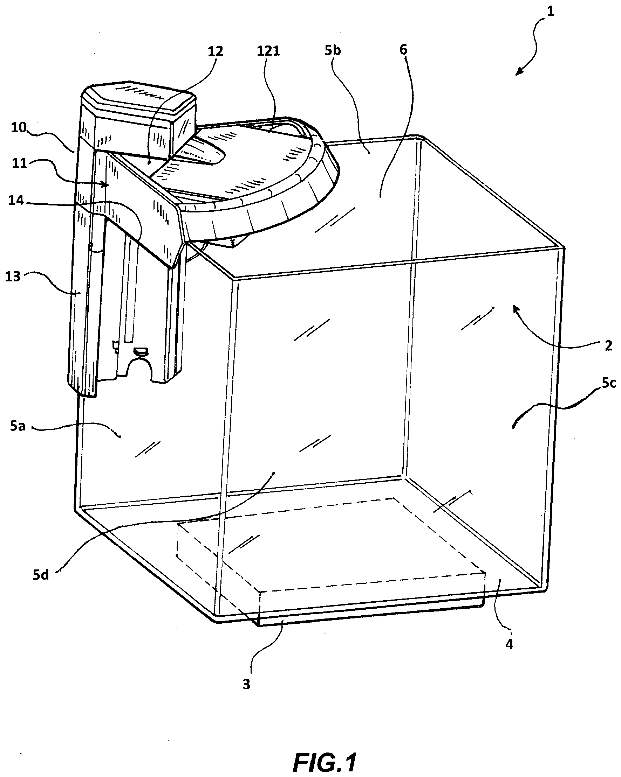

Head 12 is moulded as a single body of plastics material and on the outer edges of sector 121 has attachment means 14 to each of convergent walls 5a,b. In the embodiment illustrated in Figure 1, head 12 has an angular extension which substantially corresponds to the extension of the angle formed between 5a,b and attachment means 14 comprise corresponding lips 14 which extend together with angular rib member 13 along the opposite sides of head 12 and converge towards angular rib member 13.

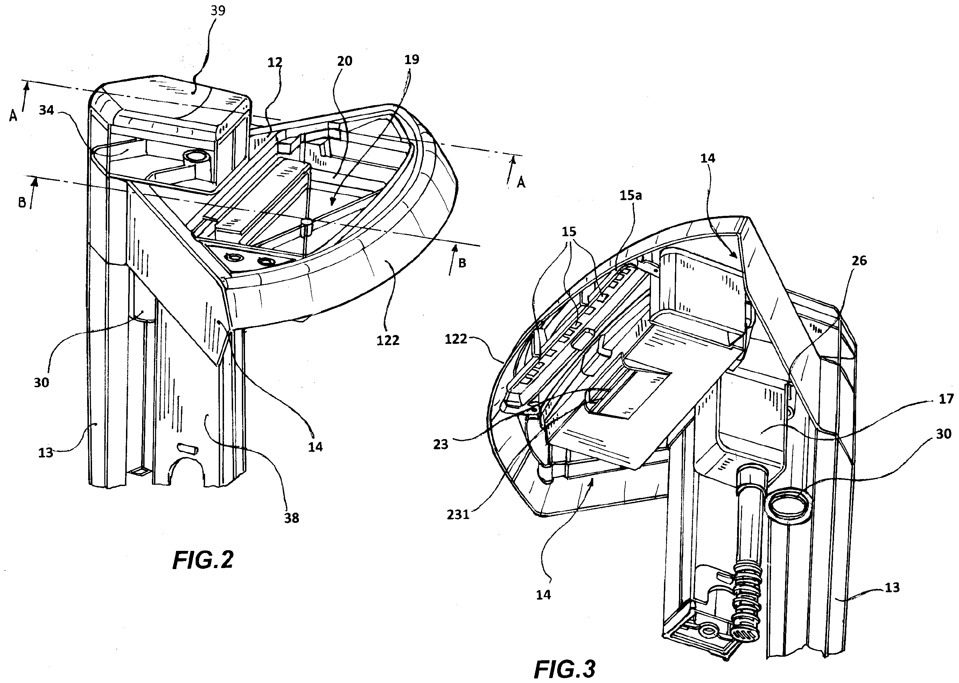

As illustrated in Figure 3, on the undersurface of head 12, or on the surface which when in use faces base 3, close to the circumferential edge 122 bounding head 12, there is a plurality of LED lights 15 embedded in a bed of resin forming a watertight enclosure 15a.

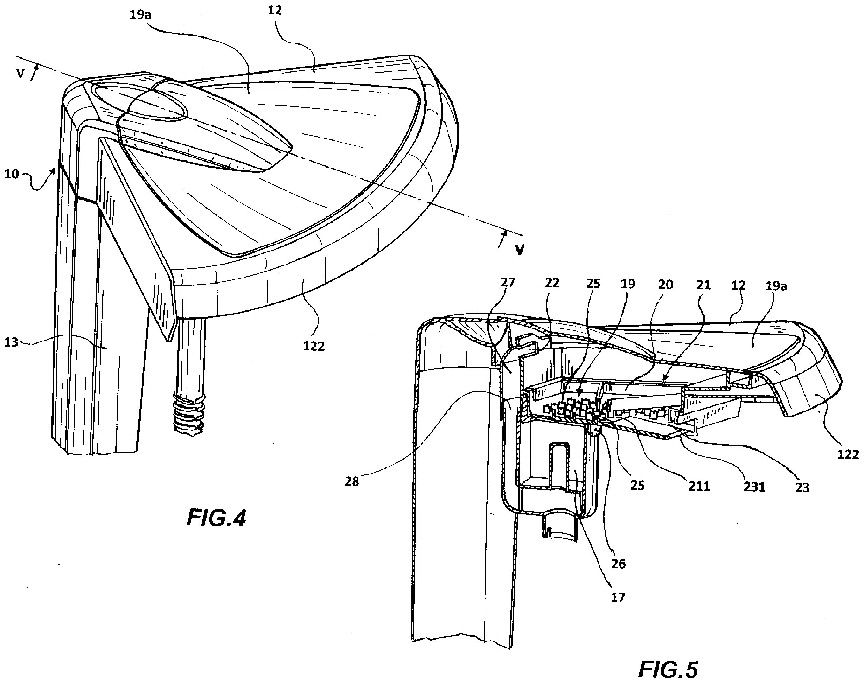

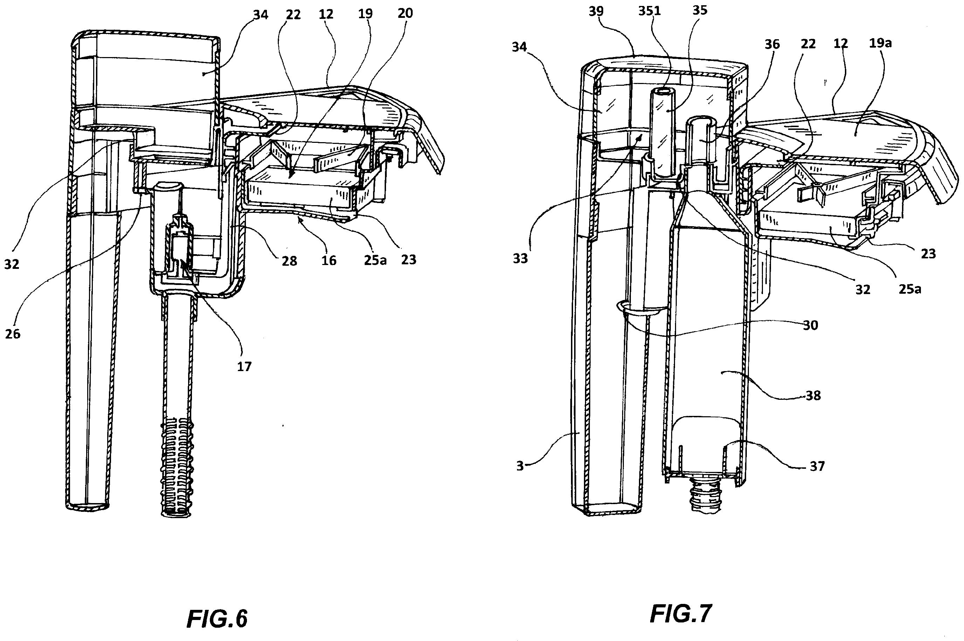

With reference to Figures 5 and 6, a filter 16 with a corresponding circulating pump 17 is also incorporated into head 12. Filter 16 has a seat 19 for a replaceable filter cartridge, such as a bag filter cartridge, the frame 20 of which is illustrated. This seat 19 is closed off above by a removable lid 19a.

Filter 16 comprises a vessel 21 with an inlet opening 22 and an outlet opening 23; seat 19 is located in vessel 21 in an intermediate position between the abovementioned openings in such a way that the flow of water admitted via opening 22 passes across the filter cartridge and is returned to tank 2 of the aquarium via outlet opening 23. In the embodiment of the invention in Figure 5 bottom wall 211 of vessel 21 which faces seat 19 is provided with a plurality of appendages 25 which act as anchorages for a bacterial bed capable of acting as a biological filter. A further biological filter 25a, comprising a layer of synthetic resin foam acting as an anchor for a corresponding bacterial bed can be placed between appendages 25 and filter cartridge 20.

Preferably outlet opening 23 has a laminar opening 231, that is one whose transverse dimension is definitely greater than its vertical height. This solution encourages a return flow of water to tank 2, producing little noise.

Pump 17 is attached to a seat 26 in head 12, preferably through a removable coupling such as a press fit, or a screw, bayonet or snap connection. Pump 17 can also be incorporated in head 12 to form a single body with it. A delivery conduit 27 is provided in head 12 between inlet opening 22 and seat 26. An outlet 28 from pump 17 is provided with a leaktight attachment to this conduit 27 when the pump is inserted in corresponding seat 26.

With reference to Figures 2 and 7, head 12 also includes a housing 30 for a heater (not illustrated) of the immersion type. The characteristics of this heater are in themselves conventional, with the exception of its arrangement for attachment to housing 30.

In the same way head 12 is designed to receive a skimmer 33 in a second housing 32. As illustrated in Figure 7, skimmer 33 in turn includes a cup 34 with a return conduit 35 to an opening 351 which is elevated with respect to water inlet conduit 36. Conduit 36 is in turn connected to a chamber 38 which contains an aerator 37 to generate the air bubbles necessary for the skimming function.

Cup 34 is closed off at the top, that is on the side which in use is opposite base 3, by a second lid 39 which in plan has an identical shape to the shape (in plan) of second housing 32 in such a way that when skimmer 33 is not fitted to services unit 10 this housing can be likewise closed off by the abovementioned second lid 39.

In an alternative embodiment of the invention illustrated in Figures 4 and 5, head 12 has no housing 32 designed to receive skimmer 33. In this case lid 19a extends to the vicinity of the corner at which the opposite edges of head 12 converge, permitting simpler replacement of the filter cartridge.

The invention constructed in this way incorporates all the functional elements necessary for satisfactory functioning and maintenance of the aquarium in a single device. This also provide many advantages in that it is possible according to the invention to supply all or some of the devices incorporated therein that have an electrical function via a single power line, which may also be of the low voltage SELV (Safety Extra Low Voltage) type, which is furthermore contained within and hidden by angular rib member 13. The latter also serves to stabilise the connection between the head 12 of technical element 11 and walls 5a,b of tank 2. Systems for the control and delay of all electrical functions may also be added in head 12.

## Claims

1. An aquarium including a tank (2) with at least two side walls (5a, 5b) converging at an angle, and a services unit (10) associated with the tank, the services unit (10) including a filter (16) with a corresponding pump (17) for circulating the liquids present in the tank (2), said filter (16) and corresponding pump (17) being incorporated into a single technical element (11) which is designed to be removably supported within said tank (2) by attachment means (14) to each of the converging walls (5a, 5b) at the angle formed between them, **characterized in that** the technical element (11) includes a head (12) having in plan the shape of a sector of a circle or of an ellipse, the technical element (11) further including an angular rib member (13) extending substantially at right angles from one corner of the head (12) and designed to bear against the angle formed by the convergent walls (5a, 5b) of the tank (2), and **in that** a single power line is provided for said service unit (10), said single power line being contained and hidden by said angular rib member (13).

2. An aquarium according to claim 1, wherein said services unit (10) includes a device for illuminating the tank (2) incorporated in the technical element (11).

3. An aquarium according to claim 1 or 2, wherein said services unit (10) includes a skimming device (33) incorporated in the technical element (11).

4. An aquarium according to any one of the preceding claims, wherein the technical element (11) includes a housing (30) for an immersion heater.

5. An aquarium according to any one of the preceding claims, wherein the head (12) has an angular extension substantially corresponding to the extension of the angle of convergence between the walls (5a, 5b) and the attachment means (14) comprise corresponding lips extending together with the angular rib member (13) along the opposite edges of the head (12) converging towards the angular rib member (13).

6. An aquarium according to any of the preceding claims in combination with claim 2, wherein said illumination device comprises a plurality of LED lights (15) arranged along a circumferential edge (122) of the head (12),

7. An aquarium according to any one of the preceding claims, wherein the filter (16) comprises a seat (19) for a removable filter cartridge (20), the seat (19) being made of one piece with the head (12).

8. An aquarium according to claim 7, wherein the filter (16) comprises a vessel (21) with an inlet opening (22) and an outlet opening (23) and in the vessel (21) there is defined the seat (19) in an intermediate position between said openings, said vessel (21) including a base wall (211) with at least one biological filter (25a) located between said seat (19) and the outlet opening (23).

9. An aquarium according to claim 8, wherein the outlet opening (23) comprises a laminar opening (231).

10. A services unit for aquaria as a component of an aquarium according to any one of the preceding claims.

## Patentansprüche

1. Aquarium, einen Tank (2) mit mindestens zwei Seitenwänden (5a, 5b) umfassend, die unter einem Winkel zusammenlaufen, sowie eine Wartungseinheit (10), die mit dem Tank verbunden ist, wobei die Wartungseinheit (10) einen Filter (16) mit einer dazugehörigen Pumpe (17) zum Zirkulieren der sich in dem Tank (2) befindenden Flüssigkeiten umfasst, wobei der Filter (16) und die dazugehörige Pumpe (17) in einem einzigen technischen Element (11) integriert sind, das so konstruiert ist, dass es auf herausnehmbare Weise durch Befestigungsmittel (14) an jeder der zusammenlaufenden Wände (5a, 5b) unter dem von diesen gebildeten Winkel innerhalb des Tanks (2) gehalten wird, **dadurch gekennzeichnet, dass** das technische Element (11) einen Kopf (12) umfasst, der in einer Draufsicht die Form eines Kreis- oder Ellipsensektors aufweist, wobei das technische Element (11) ferner umfasst:
ein gewinkeltes Rippenbauteil (13), das sich im Wesentlichen unter rechten Winkeln von einer Ecke des Kopfes (12) erstreckt und so konstruiert ist, dass es an einem Winkel anliegt, der von den zusammenlaufenden Wänden (5a, 5b) des Tanks gebildet wird, und dass eine einzige Stromleitung für die Wartungseinheit (10) bereitgestellt wird, wobei die einzige Stromleitung durch das gewinkelte Rippenbauteil (13) eingefasst und verborgen wird.

2. Aquarium gemäß Anspruch 1, wobei die Wartungseinheit (10) eine Vorrichtung zum Beleuchten des Tanks (2) umfasst, welche in dem technischen Element (11) integriert ist.

3. Aquarium gemäß Anspruch 1 oder 2, wobei die Wartungseinheit (10) eine Abschöpfungsvorrichtung (33) umfasst, welche in das technische Element (11) integriert ist.

4. Aquarium gemäß einem beliebigen der vorangehenden Ansprüche, wobei das technische Element (11) ein Gehäuse (30) für eine Tauchheizung umfasst.

5. Aquarium gemäß einem beliebigen der vorangehenden Ansprüche, wobei der Kopf (12) eine gewinkelte Erstreckung aufweist, die im Wesentlichen der Erstreckung des Konvergenzwinkels zwischen den Wänden (5a, 5b) entspricht, und die Befestigungsmittel (14) entsprechende Lippen umfassen, die sich zusammen mit dem gewinkelten Rippenbauteil (13) entlang der entgegengesetzten Kanten des Kopfes (12) erstrecken, die zu dem gewinkelten Rippenbauteil (13) hin zusammenlaufen.

6. Aquarium gemäß einem beliebigen der vorangehenden Ansprüche in Kombination mit Anspruch 2, wobei die Beleuchtungsvorrichtung eine Vielzahl von LED-Leuchten (15) umfasst, die entlang einer Umfangskante (122) des Kopfes (12) angeordnet sind.

7. Aquarium gemäß einem beliebigen der vorangehenden Ansprüche, wobei der Filter (16) eine Aufnahme (19) für eine herausnehmbare Filterpatrone (20) umfasst, wobei die Aufnahme (19) in einem Teil mit dem Kopf (12) hergestellt ist.

8. Aquarium gemäß Anspruch 7, wobei der Filter (16) ein Gefäß (21) mit einer Einlassöffnung (22) und einer Auslassöffnung (23) umfasst, und in dem Gefäß (21) die Aufnahme (19) in einer Zwischenposition zwischen den Öffnungen definiert ist, wobei das Gefäß (21) eine Basiswand (211) mit mindestens einem biologischen Filter (25a) umfasst, der sich zwischen der Aufnahme (19) und der Auslassöffnung (23) befindet.

9. Aquarium gemäß Anspruch 8, wobei die Auslassöffnung (23) eine laminare Öffnung (231) umfasst.

10. Wartungseinheit für Aquarien als Komponente eines Aquariums gemäß einem beliebigen der vorangehenden Ansprüche.

## Revendications

1. Aquarium incluant un réservoir (2) avec au moins deux parois latérales (5a, 5b) convergeant selon un angle, et une unité de services (10) associée au réservoir, l'unité de services (10) incluant un filtre (16) avec une pompe correspondante (17) servant à faire circuler les liquides présents dans le réservoir (2), lesdits filtre (16) et pompe correspondante (17) étant incorporés dans un seul élément technique (11) qui est conçu pour être supporté de manière amovible à l'intérieur dudit réservoir (2) par des moyens d'attache (14) à chacune des parois convergentes (5a, 5b) selon l'angle formé entre elles, **caractérisé en ce que** l'élément technique (11) inclut une tête (12) présentant en plan la forme d'un secteur d'un cercle ou d'une ellipse, l'élément technique (11) incluant en outre un organe de nervure angulaire (13) s'étendant sensiblement selon des angles droits depuis un coin de la tête (12) et conçu pour porter contre l'angle formé par les parois convergentes (5a, 5b) du réservoir (2), et **en ce qu'**une ligne de puissance unique est fournie pour ladite unité de services (10), ladite ligne de puissance unique étant contenue et dissimulée par ledit organe de nervure angulaire (13).

2. Aquarium selon la revendication 1, dans lequel ladite unité de services (10) inclut un dispositif pour éclairer le réservoir (2) incorporé dans l'élément technique (11).

3. Aquarium selon la revendication 1 ou 2, dans lequel ladite unité de services (10) inclut un dispositif d'écumage (33) incorporé dans l'élément technique (11).

4. Aquarium selon l'une quelconque des revendications précédentes, dans lequel l'élément technique (11) inclut un boîtier (30) pour un thermoplongeur.

5. Aquarium selon l'une quelconque des revendications précédentes, dans lequel la tête (12) présente une extension angulaire correspondant sensiblement à l'extension de l'angle de convergence entre les parois (5a, 5b) et les moyens d'attache (14) comprennent des lèvres correspondantes s'étendant conjointement avec l'organe de nervure angulaire (13) le long des arêtes opposées de la tête (12) convergeant vers l'organe de nervure angulaire (13).

6. Aquarium selon l'une quelconque des revendications précédentes en combinaison avec la revendication 2, dans lequel ledit dispositif d'éclairage comprend une pluralité de lumières LED (15) agencées le long d'une arête circonférentielle (122) de la tête (12).

7. Aquarium selon l'une quelconque des revendications précédentes, dans lequel le filtre (16) comprend un siège (19) pour une cartouche de filtre amovible (20), le siège (19) étant réalisé en une pièce avec la tête (12).

8. Aquarium selon la revendication 7, dans lequel le filtre (16) comprend un récipient (21) avec une ouverture d'entrée (22) et une ouverture de sortie (23) et dans le récipient (21) est défini le siège (19) dans une position intermédiaire entre lesdites ouvertures, ledit récipient (21) incluant une paroi de base (211) avec au moins un filtre biologique (25a) situé entre ledit siège (19) et l'ouverture de sortie (23).

9. Aquarium selon la revendication 8, dans lequel l'ouverture de sortie (23) comprend une ouverture laminaire (231).

10. Unité de services pour des aquariums comme composant d'un aquarium selon l'une quelconque des revendications précédentes.
